## Europäisches Patentamt
## European Patent Office
## Office européen des brevets

(11) Veröffentlichungsnummer: **0 281 810**
A1

# EUROPÄISCHE PATENTANMELDUNG

(21) Anmeldenummer: 88102364.2

(22) Anmeldetag: 18.02.88

(51) Int. Cl.4: **A01N 55/04** , A01N 25/04 , A01N 25/02

(30) Priorität: 26.02.87 DE 3706237

(43) Veröffentlichungstag der Anmeldung:
14.09.88 Patentblatt 88/37

(84) Benannte Vertragsstaaten:
ES GR

(71) Anmelder: AGROLINZ AGRARCHEMIKALIEN GESELLSCHAFT M.B.H.
St. Peterstrasse 25
A-4021 Linz(AT)

(72) Erfinder: Hafner, Norbert
Hauptplatz 15
A-4020 Linz(AT)
Erfinder: Stadlhuber, Rudolf
Stadlerstrasse 6c
A-4020 Linz(AT)

(74) Vertreter: Kunz, Ekkehard, Dr.
Chemie Linz AG Patentabteilung St. Peter-Strasse 25
A-4020 Linz(AT)

(54) Kältestabile, in Wasser dispergierbare flüssige Konzentratformulierung.

(57) Flüssige Konzentratformulierung einer akariziden Organozinnverbindung, die von 2,5 bis 30 % Gew./Vol. mindestens einer grenzflächenaktiven Substanz, Borsäure oder deren Anhydride, mindestens einen gesättigten oder ungesättigten ein-, zwei-oder dreiwertigen Alkohol, gegebenenfalls ein Lacton und gegebenenfalls ein organisches nicht-alkoholisches Lösungsmittel, und darin gelöst 15 bis 70 % Gew./Vol. Tricyclohexylzinn-oder Trineophyllzinnoxid oder -hydroxid enthält. Die Konzentratformulierung ist in Wasser dispergierbar und äußerst kältestabil.

EP 0 281 810 A1

## Kältestabile, in Wasser dispergierbare flüssige Konzentratformulierung

Diese Erfindung bezieht sich auf eine kältestabile, in Wasser dispergierbare, flüssige Konzentratformulierung einer akariziden Organozinnverbindung, das Herstellungsverfahren einer solchen Formulierung und deren Anwendung bei der Bekämpfung von Schädlingen.

Organozinnverbindungen sind seit vielen Jahren bekannt und sind beispielsweise in den GB-PS-en 1.327.336, 1.369.147 und 1.369.148 und den US-PS-en 3.264.177 und 3.389.048 beschrieben. Insbesondere bei der Bekämpfung von Schädlingen der Klasse Acarina werden solche Organozinnverbindungen verwendet, wobei speziell Tricyclohexylzinnderivate und Trineophyllzinnderivate eingesetzt werden. Cyhexatin (Tricyclohexylzinnhydroxid), ein Produkt der Fa. Dow Chemical mit der Handelsbezeichnung "Plictran", und Fenbutatinoxid (FBO = Bis-(tris(2-methyl)-2-phenylpropyl)zinnoxid), ein Produkt der Fa. Shell mit der Handelsbezeichnung "Vendex" (für die USA) bzw. "Torque" (außerhalb der USA), sind bekannte kommerziell erhältliche Beispiele.

Flüssige Konzentratformulierungen sollen wenigstens die folgenden Eigenschaften besitzen: Sie sollen homogene Produkte sein, die unter normalen Lagerbedingungen sich nicht zersetzen oder auskristallisieren; sie sollen leicht eine Dispersion oder Lösung bilden, wenn sie zu Wasser in einem Sprühtank zugesetzt werden; sie sollen physikochemisch stabil sein; sie sollen eine zufriedenstellende Tieftemperaturstabilität aufweisen, d.h. die Formulierungen sollen bei tiefen Temperaturen nicht auskristallisieren, insbesondere nicht irreversibel ohne Anwendung von die Raumtemperatur überschreitender Temperaturen. Die Prüfung solcher Formulierungen kann nach dem CIPAC-Test Nr. MT 39, einem offiziellen Test des Collaborative International Analytical Committee erfolgen. Der Wirkstoffgehalt soll unter Erhalt obiger Eigenschaften maximiert sein. Dies minimiert den Verpackungsbedarf, die Lagerhaltungskosten und reduziert den umweltbelastenden Gehalt an organischen Lösungsmitteln.

Es ist bekannt, daß die oben erwähnten Organozinnverbindungen bei Raumtemperatur in Wasser, Alkoholen und in den meisten organischen Lösungsmitteln, die im Pflanzenschutz Verwendung finden, nur eine geringe Löslichkeit besitzen. Daher war die Herstellung konzentrierter, flüssiger Formulierungen, beispielsweise emulgierbarer Konzentrate, trotz zahlreicher Bemühungen lange Zeit nicht möglich, obwohl dieser Formulierungstyp im allgemeinen Vorteile gegenüber benetzbaren Pulvern und Suspensionskonzentraten aufweist, wie z. B. den Vorteil der einfacheren Herstellung unter Verwendung billiger technischer Anlagen.

Weiters ist aus der EP-0 057 035 bekannt, daß bestimmte biozide Organozinnverbindungen durch die Verwendung von Alkoholen als Lösungsmittel (oder als Lösungsvermittler in Kombination mit einem mit Wasser nicht mischbaren, organischen Lösungsmittel) und Lösungstemperaturen von mindestens 50 °C nach Abkühlen stabile Lösungen bilden, deren Konzentration an Organozinnverbindung über der Raumtemperaturlöslichkeit in diesen Alkoholen liegt. Eine weitere Erhöhung dieser Konzentration wird durch Zugabe von bis zu 10 % Gew./Vol. einer Monocarbonsäure erreicht. Diese grenzflächenaktive Substanzen enthaltenden Lösungen können leicht mit Wasser unter Bildung von Dispersionen verdünnt werden.

Die resultierenden Formulierungen zeigen im Vergleich mit den handelsüblichen Suspensionskonzentraten ähnliche toxische Wirkungen bei viel niedrigerer Konzentration des aktiven Wirkstoffs, größere Wirkungsgeschwindigkeit und leicht überlegene Langzeitwirkung.

Nachteilig an diesen Formulierungen ist ihre unzureichende Tieftemperaturstabilität bei höheren Wirkstoffkonzentrationen, was eine praktische Verwendung nur unter kostenintensiven Lagerbedingungen oder nur bei Inkaufnahme der durch geringeren Wirkstoffgehalt auftretenden Nachteile möglich macht.

Überraschenderweise wurde nun gefunden, daß grenzflächenaktive Substanzen enthaltende konzentrierte Suspensionen bestimmter biozider Organozinnverbindungen in im Pflanzenschutz üblichen organischen Lösungsmitteln durch den Zusatz von Borsäure und Alkohol bei Raumtemperatur in klare Lösungen übergeführt werden können. Statt Borsäure ist es auch möglich, eines deren Anhydride, wie Metaborsäure oder Bortrioxid, einzusetzen. Der Lösungsvorgang verläuft über eine Komplexbildung und führt in Abwesenheit grenzflächenaktiver Substanzen und geeigneter Lösungsvermittler zu zwei-oder mehrphasigen Systemen, aus denen jedoch nach Einbringen grenz-flächenaktiver Substanzen klare Mikroemulsionen oder echte Lösungen entstehen. Die entstehenden Komplexe sind teilweise isolierbar und durch Sn-NMR identifizierbar. Die resultierenden Formulierungen enthalten diese bioziden Organozinnverbindungen in einer Konzentration, die sowohl die Raumtemperaturlöslichkeit im entsprechenden Alkohol bei weitem, als auch die nach dem Verfahren entsprechend EP-0 057 035 erhaltene Konzentration an der bioziden Organozinnverbindung in der Formulierung um 50 oder mehr % Gew./Vol. übertrifft. Weiters entsprechen die gemäß Erfindung hergestellten Formulierungen auch bei Konzentrationen bis zu 50 % Gew./Vol. an biozider Organozinnverbindung den Anforderungen bezüglich der Tieftemperaturstabilität und lassen sich mit Wasser leicht zu

2

stabilen Dispersionen verdünnen.

Demgemäß betrifft die gegenständliche Erfindung eine kältestabile, in Wasser dispergierbare, flüssige Konzentratformulierung einer akariziden Organozinnverbindung, welche von 2,5 bis 30 % Gew./Vol. mindestens einer grenzflächenaktiven Substanz, Borsäure oder deren Anhydride, mindestens einen gesättigten oder ungesättigten geradkettigen oder verzweigten ein-, zwei-oder dreiwertigen Alkohol, gegebenenfalls substituiert durch eine oder mehrere Halogen-, Nitro-, Alkoxy-, Alkoxyalkoxy-, Alkoxycarbonyl-, Alkylcarbonyl-, Alkylcarbonyloxy-oder Arylgruppen, gegebenenfalls ein Lacton und gegebenenfalls ein organisches nicht-alkoholisches Lösungsmittel, und darin gelöst 15 bis 70 % Gew./Vol., vorzugsweise 15 bis 60 % Gew./Vol., Tricyclohexylzinn-oder Trineophyllzinnoxid oder -hydroxid enthält.

Die Molverhältnisse des entsprechenden Organozinnhydroxids zur Borsäure oder dem Borsäureäquivalent des Anhydrids und zum Hydroxyläquivalent des (der) enthaltenen Alkohols (Alkohole) betragen nach einem weiteren Merkmal der Erfindung 1 : (0,5 bis 2) : (1 bis 5), vorzugsweise 1 : 1 : (2 bis 3) und insbesondere 1 : 1 : 3..

Die Formulierungen der vorliegenden Erfindung können durch ein Verfahren hergestellt werden, das die Bildung einer Lösung einer Organozinnverbindung durch Mischen von 15 bis 70 % Gew./Vol. des Trineophyllzinn-oder Tricyclohexylzinnoxids oder -hydroxids, 2,5 bis 30 % Gew./Vol. mindestens eines Emulgators, Borsäure oder deren Anhydride und mindestens eines wie oben definierten Alkohols in den oben definierten Molverhältnissen, und gegbenenfalls eines im Pflanzenschutz gebräuchlichen organischen nicht-alkoholischen Lösungsmittels oder Lösungsmittelgemisches bei Temperaturen von 20 bis 80 °C, vorzugsweise von 50 bis 80 °C zur Beschleunigung der Lösungsbildung, umfaßt und gegebenenfalls eine teilweise oder vollständige Trocknung dieser Lösung mittels eines Molekularsiebes oder durch Abdestillieren von maximal 10 % Gew./Vol. einer Wasser enthaltenden Phase, (beispielsweise Vakuumfiltration bei erhöhter Temperatur). In letzterem Falle wird mit dem abdestillierten Anteil der nicht wassermischbaren Phase (2-phasiges Destillat) und/oder mit Lösungsmittel erneut auf ein definiertes Volumen aufgefüllt.

Die Herstellung der Lösung der Organozinnverbindung kann durch Herstellung eines Vorkonzentrates durch Mischen von 15 bis 70 % Gew./Vol. des Trineophyllzinn-oder Tricyclohexylzinnoxids oder -hydroxids, Borsäure oder deren Anhydride und mindestens eines Teils des wie oben definierten Alkohols in den oben definierten Molverhältnissen, und gegebenenfalls eines Teiles des Lösungsmittels oder Lösungmittelgemisches bei 20 bis 80 °C , insbesondere bei 50 bis 80 °C, erfolgen, wobei gegebenenfalls eine teilweise oder vollständige Trocknung dieses Vorkonzentrates mittels eines Molekularsiebes oder durch Abdestillieren einer Wasser enthaltenden Phase (beispielsweise Vakuumfiltration bei erhöhter Temperatur), vorgenommen wird. Das entstehende Vorkonzentrat kann ein-oder mehrphasig sein. Anschließend erfolgt die Zugabe des Emulgators, des fehlenden Teils des Alkohols und das Auffüllen mit Lösungsmittel (Lösungsmittelgemisch) auf ein definiertes Volumen.

Die bevorzugten Organozinnverbindungen für die dieser Erfindung entsprechenden Formulierungen sind Cyhexatin und speziell Fenbutatinoxid. Es ist vorteil haft, den Anteil der Organozinnverbindung in der Formulierung zwischen 15 und 60 % Gew./Vol. zu wählen.

Der (die) gegebenenfalls substituierte(n) gesättigte(n) oder ungesättigte(n) mono-, di-oder trifunktionelle-(n) Alkohol(e) enthält (enthalten) bis zu 18 Kohlenstoffatome. Der Alkohol kann geradkettig, verzweigt oder eine alicyclische Verbindung sein und jeder gegebenenfalls vorhandene Alkyl-oder Alkenylsubstituent kann geradkettig oder verzweigt sein. Der Alkohol kann auch durch eine oder mehrere Halogen-, Nitro-, Alkoxy-, Alkoxyalkoxy-, Alkoxycarbonyl-, Alkylcarbonyl-, Alkylcarbonyloxygruppen substituiert sein. Alkyl-oder Alkenylgruppen in einem gegebenenfalls vorhandenen Substituenten sollen vorzugsweise 1 bis 6 Kohlenstoffatome enthalten. Als Arylsubstituenten werden Phenylgruppen bevorzugt, gegebenenfalls substituiert durch eine oder mehrere Einheiten unabhängig gewählt aus der Gruppe der Halogen-, vorzugsweise Chlor-oder Bromatome, Alkyl-, vorzugsweise Methyl-, und Alkoxy-, vorzugsweise Methoxygruppen. Beispiele für monofunktionelle Alkohole inkludieren $C_{1-8}$-Alkanole, wie Methanol, Isobutanol und n-Oktanol. Beispiele für alicyclische Alkohole sind Cyclohexanol und Cyclopentanol. Beispiele für ungesättigte Alkohole inkludieren mono-olefinisch ungesättigte Alkohole wie Oleylalkohol. Beispiele 2-wertiger Alkohole schließen $C_{1-6}$-Glykole, wie Propylenglykol, Alkyl-nitro-alkandiole wie 2-Methyl-2-nitro-1,3-propandiol und Hexylenglykol (2-Methyl-2,4-pentandiol) ein. Beispiele für einwertige durch eine Alkylcarbonyloxygruppe substituierte Alkohole sind teilveresterte Glykole. Alkoxysubstituierte Alkohole sind z.B. 2-Methoxyethanol, 1-Methoxy-2-propanol und 2-n-Butoxyethanol. Alkylcarbonylsubstituierte Alkohole schließen z.B. Ethyllactat ein. Als alkoxyalkoxysubstituierter Alkohol ist z.B. Diethylenglykolmonoethylether anzuführen. Ein Beispiel eines Arylalkohols ist Benzylalkohol.

Die am meisten bevorzugten Alkohole sind primäre Alkanole, primäre Alkoxyalkanole, Alkoxyalkoxyalkanole mit 3 - 6 Kohlenstoffatomen, vorzugsweise Isobutanol, 2-Ethoxyethanol, Diethylenglykolmonoethylether, Propylenglykol, Propan-1,3-diol und Hexylenglykol.

Konzentratformulierungen mit dem Wirkstoff Cyhexatin ergeben mit Isobutanol oder Hexylenglykol sehr gute Ergebnisse.

Als Lösungsmittel kommen in Frage: Aromatische Kohlenwasserstoffe, bevorzugt die Fraktionen $C_8$-$C_{12}$, wie z.B Xylolgemische oder substituierte Naphthaline, die unter den Handelsnamen Solvesso (z.B. Solvesso 100), ein mehr als 95 Vol. % Aromaten enthaltendes Lösungsmittel, oder Shellsol (z.B. Shellsol A), Sortiment von hochsiedenden Kohlenwasserstoff-Lösungs-und Verdünnungsmitteln, nicht-aromatische Kohlenwasserstoffe wie Cyclohexan oder Paraffine, raffinierte Mineral-oder Pflanzenöle, Ketone wie Cyclohexanon, 5-Methyl-2-hexanon und stark polare Lösungsmittel, wie z.B. Butyrolacton.

Bevorzugt zum Einsatz kommen mit Wasser nicht mischbare organische Lösungsmittel mit relativ hohem Siedepunkt, deren übrige Eigenschaften dem vorgesehenen Einsatz der Formulierung entsprechen, wir z.B. geringe Phytotoxizität des Lösungsmittels bei Verwendung im Pflanzenschutz gegen Milben. Polare Lösungsmittel kommen üblicherweise nur bei Verwendung von mit polaren Gruppen substituierten Alkoholen, wir z.B. 2-Methyl-2-nitro-propandiol-1,3 oder Glycerin zum Einsatz. Das Lösungsmittel hat die Funktion eines mischbaren Trägers, mit dem nach Mischen der essentiellen Formulierungsbestandteile auf ein definiertes Volumen, wie bei Herstellung von Emulsionskonzentraten üblich, aufgefüllt wird.

Die konzentrierten flüssigen Formulierungen der vorliegenden Erfindung enthalten 2,5 bis 30 % Gew./Vol. mindestens einer grenzflächenaktiven Verbindung, um das Dispergieren bei Verdünnen mit Wasser zu gewährleisten. Die vorzugsweise angewandte Konzentration an grenzflächenaktiver Verbindung in der Formulierung ist 5 bis 15 % Gew./Vol.

Es können nicht-ionische, anionische und kationische grenzflächenaktive Verbindungen (Tenside) verwendet werden, wobei üblicherweise eine Mischung von zwei oder mehreren grenzflächenaktiven Verbindungen vorteilhaft ist. Mit Mischungen nicht-ionischer und anionischer grenzflächenaktiver Verbindungen wurden insbesondere sehr gute Ergebnisse erzielt. Jedem auf dem Gebiet der Formulierung tätigen Fachmann wird die Auswahl einer geeigneten grenzflächenaktiven Verbindung bzw. eines grenzflächenaktiven Verbindungsgemisches keine Schwierigkeiten bereiten.

Als nicht-ionische Tenside kommen in erster Linie Kondensationsprodukte von aliphatischen oder cycloaliphatischen Alkoholen, aliphatischen Aminen, gesättigten oder ungesättigten Fettsäuren, Alkylphenolen und Arylphenolen mit Ethylenoxid, Propylenoxid oder Mischungen von Ethylen-und Propylenoxiden, sowie Polyethylenoxidaddukte an Polypropylenglykol, Ethylendiaminopolypropylenglykol und Alkylpolypropylenglykol in Frage. Weiters kommen auch Fettsäureester von Polyoxyethylensorbitan sowie das Polyoxyethylensorbitantrioleat in Betracht.

Anionische Tenside inkludieren Alkali-, Erdalkali-oder gegebenenfalls substituierte Ammoniumsalze der höheren Fettsäuren oder natürlicher Fettsäuregemische oder partiell veresterter Dicarbonsäuren. Weiters gehören dazu Fettsulfonate, Fettsulfate, sulfonierte Benzimidazolderivate und Alkylarylsulfonate. Ferner kommen auch entsprechende Phosphate wie z.B. Salze des Phosphorsäureesters eines p-Nonylphenolethoxylates oder Phospholipide in Frage.

Bei kationischen Tensiden handelt es sich vor allem um quartäre Ammoniumsalze, welche als N-Substituenten mindestens eine Alkylrest mit 8 -22 C-Atomen enthalten und als weitere Substituenten niedrige, gegebenenfalls halogenierte Alkyl-, Benzyl-oder niedrige Hydroxyalkylreste aufweisen. Die Salze liegen vorzugsweise als Halogenide, Methylsulfate oder Ethylsulfate vor, z.B. das Stearyltrimethylammoniumchlorid oder das Benzyldi-(2-chlorethyl)-ethylammoniumbromid.

Als vorteilhafte Mischungen von Tensiden haben sich vor allem Mischungen anionischer, wie Salze der Alkylarylsulfonate mit nicht-ionischen, wie Nonylphenolpolyethoxyethanolen, ethoxylierten Pflanzenölen, Rizinusölpolyglykolethern oder Fettsäureestern von Polyoxyethylensorbitan erwiesen.

Die Konzentratformulierung der gegenständlichen Erfindung kann zusätzlich bis zu 20 % Gew./Vol. eines oder mehrerer Stabilisatoren, Eindringhilfsmittel und/oder Korrosionsinhibitoren und/oder bis zu 20 % Gew./Vol. einer oder mehrerer Verbindungen mit schädlingsbekämpfenden, fungiziden oder eine Lockwirkung ausübenden Eigenschaften, z.B. Insektizide wie Cypermethrin oder Fenvalerate enthalten.

Bei der Herstellung der erfindungsgemäßen Formulierungen erfolgt die Auflösung der bioziden Organozinnverbindung im Temperaturbereich von 20 bis 80 °C, wobei als obere Temperaturgrenze die Siedetemperatur der Lösung zu betrachten ist. Um eine entsprechende Lösungsgeschwindigkeit zu gewährleisten, ist der Temperaturbereich von 50 bis 80 °C zu bevorzugen.

Die Reihenfolge der Mischung der Komponenten scheint ohne Bedeutung zu sein.

Ein weiterer Bestandteil der Erfindung ist ein Verfahren zur Bekämpfung von Schädlingen am Ort ihres Auftretens durch das Aufbringen einer Dispersion der beschriebenen bioziden flüssigen Formulierung in Wasser an besagtem Ort.

Die vorliegende Erfindung wird durch die folgenden Beispiele näher erläutert, in denen bedeuten:

Marlowet EF: eine Mischung von Carbonsäurepolyglykolestern
Atlox 4851-B und Atlox 4855-B: Alkylarylsulfonat in Mischung mit Polyoxyethylentriglycerid
Atlox 4857-B: Alkylarylsulfonat in Mischung mit Polyoxyethylenalkylphenol
Atlox 3335-B: Alkylarylsulfonat in Mischung mit Polyoxyethylensorbitantallölester
Atlox 3386-B: Alkylarylsulfonat in Mischung mit Polyoxyethylensorbitfettsäureester
Atlox 3400-B: Alkylarylsulfonat mit Polyoxyethylenalkylphenyl
Tween 65 (Atlas Chemie): Polyoxyethylen (20)sorbitantristearat
Wettol EM2: Ethoxyliertes Alkylphenol
Wettol EM1: Alkylarylsulfonat (70%ige Lösung in niederem Alkohol)
Servirox OEG 45: Ethoxyliertes Rizinusöl


Beispiel 1:

Borsäure, Isobutanol und der Großteil des nicht-alkoholischen Lösungmittels werden in einem Reaktionsgefäß gemischt und unter Rühren auf 80 °C erhitzt. Nach Zugabe von 200 g Molekularsieb (Union Carbide Typ 3A, 1/16") wird das Fenbutatinoxid eingetragen und bei 80 °C bis zu Klärung der Lösung gerührt.

Anschließend wird das Molekularsieb und unlösliche Verunreinigungen durch Vakuumfiltration entfernt. Das Waschen des Filterkuchens erfolgt mit auf 60 °C erhitztem Lösungsmittel. Nach Abkühlen des Filtrates auf Raumtemperatur werden die Emulgatoren zugegeben und mit dem nicht-alkoholischen Lösungmittel auf 1 l aufgefüllt. Die auf 5 °C gekühlte Lösung wird nach 48 h, wenn notwendig, nochmals filtriert.

Die resultierenden Formulierungen sind homogene Flüssigkeiten, die sowohl nach 3-monatiger Lagerung bei 50 °C bzw. Raumtemperatur als auch nach 7-tägiger Lagerung bei 0 °C homogen bleiben und in Wasser unter Bildung einer homogenen Emulsion leicht dispergieren.

| FBO | 400 g | 400 |
| Borsäure | 47 g | 47 |
| Isobutanol | 113 g | 113 |
| Atlox 4855-B | 70 g | 70 |
| Atlox 4880-B | 30 g | 30 |
| Solvesso 100 | ad 1 l | - |
| Cumol | - | ad 1 l |

Beispiel 2:

FBO, Borsäure, 2-Methyl-2-nitro-1,3-propandiol, die Emulgatoren und der Großteil des Xylols werden mit 200 g Molekularsieb (Union Carbide Typ 3A, 1/16") in einem Reaktionsgefäß gemischt und unter Rühren auf 80 °C erhitzt und bei 80 °C bis zur Klärung der Lösung gerührt. Die Lösung wird auf Raumtemperatur abgekühlt, das 4-Butyrolacton zugegeben, und das Molekularsieb und unlösliche Verunreiningung durch Vakuumfiltration entfernt. Anschließend wird mit Xylol auf 1 l aufgefüllt. Die auf 5 °C gekühlte Lösung wird nach 48 h, wenn nötig, nochmals filtriert. Die resultierende Formulierung ist eine homogene Flüssigkeit, die sowohl bei Raumtemperatur als auch nach 7-tägiger Lagerung bei 0 °C homogen bleibt und in Wasser unter Bildung einer homogenen Emulsion leicht dispergiert.

FBO       200 g
Borsäure       23,5 g
2-Methyl-2-nitro-1,3-propandiol       52,4 g
Atlox 4880-B       25,0 g
Atlox 3335-B       50,0 g

Atlox 4857-B      25,0 g
4-Butyrolacton    250,0 g
Xylol      ad 1 l

Beispiel 3:

Borsäure, Propandiol, 111 g 2-Methyl-2-butanol und die Emulgatoren werden in einem Reaktionsgefäß unter Rühren auf 80 °C erhitzt. Anschließend wird das Fenbutatinoxid eingetragen und bei 80 °C bis zur Klärung der Lösung gerührt (ca. 30 min). Die Lösung wird unter Rühren auf 40 °C gekühlt und mittels Vakuumfiltration von unlöslichen Verunreinigungen befreit. Nach Abkühlen des Filtrates auf Raumtemperatur wird mit 2-Methyl-2-butanol auf 1 l aufgefüllt und, wenn notwendig, nach 48 h nochmals filtriert.

Die resultierenden Formulierungen sind homogene Flüssigkeiten, die bei Raumtemperatur homogen bleiben und in Wasser unter Bildung einer homogenen Emulsion leicht dispergieren.

| | | |
|---|---|---|
| FBO | 600 g | 600 g |
| Borsäure | 70 g | 71 g |
| Propandiol-1,3 | 87 g | - |
| Propandiol-1,2 | - | 87 g |
| 2-Methyl-2-butanol | 111 g | 111 g |
| Atlox 4855-B | 75 g | 75 g |
| Atlox 4880-B | 75 g | 75 g |
| 2-Methyl-2-butanol | ad 1 l | ad 1 l |

Beispiel 4:

Borsäure, Isobutanol und die Emulgatoren werden in einem Reaktionsgefäß unter Rühren auf 80 °C erhitzt. Anschließend wird das Fenbutatinoxid eingetragen und bei 80 °C bis zur Klärung der Lösung gerührt (ca. 30 min.) Die Lösung wird unter Rühren auf 40 °C gekühlt und mittels Vakuumfiltration von unlöslichen Verunreinigungen befreit. Nach Abkühlen des Filtrates auf Raumtemperatur wird mit Solvesso 100 auf 1 l aufgefüllt und, wenn notwendig, nach 48 h nochmals filtriert.

Die resultierende Formulierung ist eine homogene Flüssigkeit, die bei Raumtemperatur homogen bleibt und in Wasser unter Bildung homogener Emulsionen leicht dispergiert.

FBO      600 g
Borsäure      71 g
Isobutanol      238 g
Wettol EM1      50 g
Wettol EM2      50 g
Solvesso 100      ad 1 l

Beispiel 5:

Der Großteil des Isobutanols, des Solvesso 100 und die restlichen Formulierungsbestandteile werden in einem Reaktionsgefäß unter Rühren in ca. 15 min auf 80 °C erhitzt und bei 80 °C bis zur Klärung der Lösung gerührt (ca. 20 min). Anschließend läßt man die Lösung unter Rühren auf 50 °C abkühlen und entfernt mittels Vakuumfiltration unter Zuhilfenahme von Filterhilfsstoff unlösliche Be standteile. Der Filterkuchen wird mit Isobutanol nachgewaschen und mit Solvesso 100 auf 1 l aufgefüllt und nach 48 h, wenn notwendig, nochmals filtriert.

Die resultierende Formulierung ist eine viskose homogene Flüssigkeit, die bei Raumtemperatur homogen bleibt und sich in Wasser zu einer homogenen Emulsion dispergieren läßt.

FBO 700 g
Borsäure 82 g
Isobutanol 273 g
Wettol EM1 75 g
Marlowet EF 75 g
Solvesso 100 ad 1 l

Beispiel 6:

Der Großteils des Isobutanols und die restlichen Formulierungsbestandteile werden in einem Reaktionsgefäß unter Rühren in ca. 15 min auf 80 °C erhitzt und bei 80 °C bis zur Klärung der Lösung gerührt (ca. 15 min). Anschließend läßt man die Lösung unter Rühren auf 50 °C abkühlen und entfernt mittels Druckfiltration bei 50 °C unter Zuhilfenahme von Filterhilfsstoff unlösliche Bestandteile. Der Filterkuchen wird mit 50 °C erhitztem Isobutanol nachgewaschen und nach Abkühlen des Filtrats auf Raumtemperatur wird mit Isobutanol auf 1 l aufgefüllt. Nach 48 h wird, wenn notwendig, nochmals filtriert.

Die resultierende Formulierung ist eine viskose homogene Flüssigkeit, die bei Raumtemperatur homogen bleibt und sich in Wasser zu einer homogenen Emulsion dispergieren läßt.

FBO 700 g
$B_2O_3$ 46,3 g
Isobutanol 182,2 g
Wettol EM1 50,0 g
Servirox OEG 45 150,0 g

Beispiel 7:

Borsäure, Isobutanol und Fenbutatinoxid werden in einem Reaktionsgefäß unter Rühren auf 80 °C erhitzt und bei 80 °C bis zur Klärung der Lösung gerührt (ca. 15 min). Die Lösung wird unter Rühren auf 50 °C gekühlt und mittels Vakuumfiltration von unlöslichen Verunreinigungen befreit. Das Filtrat wird mit Solvesso 100 auf 1 l aufgefüllt. Die auf 5 °C gekühlte Lösung wird nach 48 h, wenn notwendig, nochmals filtriert.

Die resultierende Formulierung ist eine homogene Flüssigkeit, die sowohl bei Raumtemperatur als auch bei 7-tägiger Lagerung bei -10 °C homogen bleibt und in Wasser unter Bildung einer homogenen Emulsion leicht dispergiert.

FBO 250 g
Borsäure 29 g
Isobutanol 91 g
Wettol EM1 50 g
Wettol EM2 50 g
Solvesso 100 ad 1 l

Beispiel 8:

Der Großteil des nicht-alkoholischen Lösungmittels und die restlichen Formulierungsbestandteile werden in einem Reaktionsgefäß unter Rühren in ca. 15 min auf 80 °C erhitzt und bei 80 °C bis zur Klärung der Lösung gerührt (ca. 20 min). Anschließend läßt man die Lösung unter Rühren auf 50 °C abkühlen und entfernt mittels Vakuumfiltration oder Druckfiltration unter Zuhilfenahme von Filterhilfsstoff unlösliche Bestandteile. Das Filtrat wird mit dem nicht-alkoholischen Lösungsmittel auf 1 l aufgefüllt. Die auf 5 °C gekühlte Lösung wird nach 48 h, wenn notwendig, nochmals filtriert.

Die resultierende Formulierung ist eine homogene Flüssigkeit, die sowohl nach 3-monatiger Lagerung bei 50 °C bzw. Raumtemperatur als auch bei 7-tägiger Lagerung bei 0 °C homogen bleibt und in Wasser leicht zu einer homogenen Emulsion dispergiert.

| | | | | | | | |
|---|---|---|---|---|---|---|---|
| FBO (g) | 400 | 400 | 400 | 400 | 400 | 400 | 400 |
| Borsäure (g) | 47 | 47 | 47 | 47 | 47 | - | 47 |
| $B_2O_3$ (g) | - | - | - | - | - | 27 | - |
| Isobutanol (g) | 113 | 113 | 113 | 113 | 113 | 113 | 113 |
| Atlox 4855 B (g) | 88 | 81 | 75 | 88 | 94 | 95 | 94 |
| Atlox 4880 B (g) | 38 | 44 | - | 38 | - | - | 31 |
| Marlowet EF (g) | - | - | 50 | - | 31 | 30 | - |
| Cumol | ad 1 l | - | - | - | - | - | ad 1 l |
| Solvesso 100 | - | ad 1 l | ad 1 l | ad 1 l | ad 1 l | ad 1 l | - |

Beispiel 9:

Der Großteil des nicht-alkoholischen Lösungsmittels und die restlichen Formulierungsbestandteile werden in einem Reaktionsgefäß bei Raumtemperatur bis zur Klärung gerührt (ca. 4 h). Anschließend entfernt man mittels Vakuumfiltration unter Zuhilfenahme von Filterhilfsstoff unlösliche Bestandteile. Das Filtrat wird mit dem nicht-alkoholischen Lösungsmittel auf 1 l aufgefüllt. Die auf 5 °C gekühlte Lösung wird nach 48 h, wenn notwendig, nochmals filtriert.

Die resultierende Formulierung ist eine homogene Flüssigkeit, die sowohl bei Raumtemperatur als auch bei 7-tägiger Lagerung bei 0 °C homogen bleibt und in Wasser leicht zu einer homogenen Emulsion dispergiert.

FBO    500 g
Borsäure    59 g
Isobutanol    200 g
Wettol EM1    50 g
Wettol EM2    50 g
Solvesso 100    ad 1 l

Beispiel 10:

Die Herstellung der Formulierung erfolgt entsprechend Beispiel 19, wobei jedoch anstatt Vakuumfiltration Druckfiltration angewendet wird.

Die resultierende Formulierung ist eine homogene Flüssigkeit, die sowohl bei Raumtemperatur als auch bei 7-tägiger Lagerung bei -10 °C homogen bleibt und in Wasser leicht zu einer homogenen Emulsion dispergiert.

FBO    400 g
Borsäure    47 g
Isobutanol    113 g
Atlox 4855-B    81 g
Atlox 4880-B    44 g
Solvesso 100    ad 1 l

Beispiel 11:

Die Herstellung der Formulierung erfolgt entsprechend Beispiel 10. Die Eigenschaften der Formulierung sind gleich wie in Beispiel 9.

FBO 400 g
$B_2O_3$ 27 g
2-Methylpentandiol-2,4 90 g
Isobutanol 57 g
Wettol EM1 65 g
Wettol EM2 55 g
Solvesso 100 ad 1 l

Beispiel 12:

Der Großteil des nicht-alkoholischen Lösungsmittels und die restlichen Formulierungsbestandteile werden in einem Reaktionsgefäß unter Rühren in ca. 15 min auf 80 °C erhitzt und bei 80 °C bis zur Klärung der Lösung gerührt (ca. 20 min). Anschließend läßt man die Lösung unter Rühren auf 50 °C abkühlen und entfernt mittels Vakuumfiltration unter Zuhilfenahme von Filterhilfsstoff unlösliche Bestandteile. Das Filtrat wird mit dem nicht-alkoholischen Lösungmittel auf 1 l aufgefüllt. Die auf 5 °C gekühlte Lösung wird nach 48 h, wenn notwendig, nochmals filtriert.

Die resultierende Formulierung ist eine homogene Flüssigkeit, die sowohl nach 3-monatiger Lagerung bei 50 °C bzw. Raumtemperatur als auch bei 7-tägiger Lagerung bei 0 °C homogen bleibt und in Wasser leicht zu einer homogenen Emulsion dispergiert.

| FBO (g) | 400 | 400 | 400 | 400 | 400 | 400 |
|---|---|---|---|---|---|---|
| Borsäure (g) | 47 | 47 | 47 | 47 | 47 | 47 |
| Propandiol 1,2 (g) | 58 | 59 | - | - | - | - |
| Cyclohexanol (g) | 76 | 56 | 76 | 76 | - | - |
| 2 Methyl-pentadiol 2,4 (g) | - | - | 91 | 91 | 91 | 99 |
| Isobutanol (g) | 57 | 57 | 57 | 57 | 57 | 57 |
| 4-Butyrolacton (g) | - | - | - | - | - | 65 |
| Wettol EM1 (g) | 42 | 40 | 52 | 62 | 65 | 57 |
| Wettol EM2 (g) | 58 | 60 | 48 | 58 | 55 | 55 |
| Solvesso 100 | ad 1 l | ad 1 l | ad 1 l | ad 1 l | ad 1 l | ad 1 l |

Beispiel 13:

Der Großteil des nicht-alkoholischen Lösungsmittels und die restlichen Formulierungsbestandteile werden in einem Reaktionsgefäß unter Rühren in ca. 15 min auf 80 °C erhitzt und bei 80 °C bis zur Klärung der Lösung gerührt (ca. 20 min). Anschließend läßt man die Lösung unter Rühren auf 50 °C abkühlen und entfernt mittels Vakuumfiltration unter Zuhilfenahme von Filterhilfsstoff unlösliche Bestandteile. Das Filtrat wird mit dem nicht-alkoholischen Lösungsmittel auf 1 l aufgefüllt. Die auf 5 °C gekühlte Lösung wird nach 48 h, wenn notwendig, nochmals filtriert.

Die resultierende Formulierung ist eine homogene Flüssigkeit, die sowohl nach 3-monatiger Lagerung bei 50 °C als auch bei Raumtemperatur homogen bleibt. Nach 7-tägiger Lagerung bei 0 °C auftretende Inhomogenitäten verschwinden nach 3-stündiger Lagerung bei Raumtemperatur (Test entsprechend CIPAC MT 39.1 zur Prüfung der Kältestabilität emulgierbarer Konzentrate). Die Formulierung dispergiert in Wasser leicht zu einer homogenen Emulsion.

| | | | |
|---|---|---|---|
| FBO (g) | 500 | 500 | 500 |
| Borsäure (g) | 59 | 59 | 59 |
| Propandiol-1,3 (g) | 72 | - | - |
| Propandiol-1,2 (g) | - | 72 | - |
| Isobutanol (g) | 70 | 70 | 200 |
| Wettol EM1 (g) | 50 | 50 | 50 |
| Wettol EM2 (g) | 50 | 50 | 50 |
| Solvesso 100 | ad 1 l | ad 1 l | ad 1 l |

Beispiel 14:

Der Großteil des nicht-alkoholischen Lösungsmittels und die restlichen Formulierungsbestandteile werden in einem Reaktionsgefäß unter Rühren in ca. 15 min auf 80 °C erhitzt und bei 80 °C bis zur Klärung der Lösung gerührt (ca. 20 min). Anschließend läßt man die Lösung unter Rühren auf Raumtemperatur abkühlen und entfernt mittels Vakuumfiltration unter Zuhilfenahme von Filterhilfsstoff unlösliche Bestandteile. Das Filtrat wird mit dem nicht-alkoholischen Lösungsmittel auf 1 l aufgefüllt. Die auf 5 °C gekühlte Lösung wird nach 48 h, wenn notwendig, nochmals filtriert.

Die resultierende Formulierung ist eine homogene Flüssigkeit, die bei Lagerung bei Raumtemperatur und bei 7-tägiger Lagerung bei 0 °C homogen bleibt und in Wasser leicht zu einer homogenen Emulsion dispergiert.

| FBO (g) | Borsäure (g) | Alkohol (g) | Wettol EM1 (g) | Wettol EM2 (g) | Solvesso 10 |
|---|---|---|---|---|---|
| 300 | 35 | 149[1] | 50 | 50 | ad 1 l |
| 300 | 35 | 124[2] | 50 | 50 | ad 1 l |
| 300 | 35 | 85[3] | 50 | 50 | ad 1 l |
| 300 | 35 | 135[4] | 50 | 50 | ad 1 l |
| 300 | 35 | 103[5] | 50 | 50 | ad 1 l |
| 300 | 35 | 103[6] | 50 | 50 | ad 1 l |
| 300 | 35 | 202[7] | 50 | 50 | ad 1 l |
| 300 | 35 | 177[8] | 50 | 50 | ad 1 l |
| 200 | 24 | 99[9] | 50 | 50 | ad 1 l |
| 200 | 24 | 120[10] | 50 | 50 | ad 1 l |
| 300 | 35 | 49[11] | 50 | 50 | ad 1 l |

[1] n-Octanol      [2] Benzylalkohol

[3] Butan-2-ol      [4] 2n-Butoxyethanol

[5] 1-Methoxy-2-propanol      [6] 2-Ethoxyethanol

[7] Diethylenglykolmonoethylether

[8] Diacetonalkohol      [9] Cyclohexanol

[10] Ethylacetat      [11] Methanol

Beispiel 15:

Der Großteil des nicht-alkoholischen Lösungsmittels und die restlichen Formulierungsbestandteile werden in einem Reaktionsgefäß unter Rühren in ca. 15 min auf 80 °C erhitzt und bei 80 °C bis zur Klärung der Lösung gerührt (ca. 20 min). Anschließend läßt man die Lösung unter Rühren auf 50 °C abkühlen und entfernt mittels Vakuumfiltration unter Zuhilfenahme von Filterhilfsstoff unlösliche Bestandteile. Das Filtrat wird mit dem nicht-alkoholischen Lösungsmittel auf 1 l aufgefüllt. Die auf 5 °C gekühlte Lösung wird nach 48 h, wenn notwendig, nochmals filtriert.

Die resultierende Formulierung ist eine homogene Flüssigkeit, die sowohl nach 3-monatiger Lagerung bei 50 °C als auch nach 7-tägiger Lagerung bei 0 °C homogen ist und in Wasser leicht zu einer homogenen Emulsion dispergiert.

Cyhexatin    300 g
Borsäure    48 g
2-Methyl-pentandiol-2,4    92 g
Isobutanol    58 g
Wettol EM1    28 g
Wettol EM2    22 g
Cumol    ad 1 l

**Beispiel 16:**

Der Großteil des nicht-alkoholischen Lösungsmittels und 2-Ethyl-1-hexanol werden in einem Reaktionsgefäß unter Rühren in ca. 15 min auf 80 °C erhitzt. Dann wird die Borsäure, das Cyhexatin und 150 g Molekularsieb (Union Carbide TYP 3A, 1/16") eingetragen und bei 80 °C bis zur Klärung der Lösung gerührt (ca. 20 min). Anschließend läßt man die Lösung unter Rühren auf Raumtemperatur abkühlen und entfernt durch Vakuumfiltration unter Zuhilfenahme von Filterhilfsstoff Molekularsieb und unlösliche Bestandteile. Zum Filtrat werden die Emulgatoren zugegeben und mit dem nicht-alkoholischen Lösungsmittel auf 1 l aufgefüllt. Die auf 5 °C gekühlte Lösung wird nach 48 h, wenn notwendig, nochmals filtriert.

Die resultierende Formulierung ist eine homogene Flüssigkeit, die sowohl nach 3-monatiger Lagerung bei 50 °C als auch nach 7-tägiger Lagerung bei 0 °C homogen ist und in Wasser leicht zu einer homogenen Emulsion dispergiert.

| | |
|---|---|
| Cyhexatin | 250 g |
| Borsäure | 40 g |
| 2-Ethyl-1-hexanol | 169 g |
| Atlox 4857-B | 50 g |
| Atlox 4851-B | 50 g |
| Cumol | ad 1 l |

**Beispiel 17:**

Borsäureanhydrid, Glycerin, Isobutanol, Wettol EM1 und Wettol EM2 werden in einem Reaktionsgefäß unter Rühren in ca. 15 min auf 80 °C erhitzt, Solvesso 100 und anschließend FBO eingetragen und bei 80 °C ca. 30 min gerührt. Nach Abkühlen auf 50 °C wird der Großteil des 4-Butyrolactons zugegeben und 15 min bei ca. 30 °C gerührt. Die Lösung wird durch Vakuumfiltration von unlöslichen Verunreinigungen befreit und bei Raumtemperatur mit 4-Butyrolacton auf 1 l aufgefüllt. Die auf 5 °C gekühlte Lösung wird nach 48 h, wenn notwendig, nochmals filtriert.

Die resultierende Formulierung ist eine homogene Flüssigkeit, die bei Raumtemperatur oder 7 Tage bei 0 °C gelagert homogen bleibt und in Wasser leicht zu einer homogenen Emulsion dispergiert.

| | |
|---|---|
| FBO | 300 g |
| $B_2O_3$ | 20 g |
| Glycerin | 53 g |
| Isobutanol | 42 g |
| Wettol EM1 | 75 g |
| Wettol EM2 | 75 g |
| Solvesso 100 | 260 g |
| 4-Butyrolacton | ad 1 l |

**Beispiel 18:**

Fein gemahlenes $B_2O_3$ wird mit Isobutanol, Propandiol-1,2 und einem Großteil des Solvesso 100 in einem Reaktionsgemäß auf 50°C erhitzt und 10 min. gerührt. Nach Zugabe des Fenbutatinoxids wird die Temperatur der Suspension auf 75°C erhöht und bis zur Klärung der Lösung weitere 15 min. gerührt. Nach Abkühlen der Lösung auf 50°C werden die Emulgatoren zugegeben und weitere 15 min. bei 50°C gerührt. Die warme Lösung wird durch Vakuumfiltration von unlöslichen Bestandteilen befreit, wobei eine damit verbundene Abtennung geringer hydrophiler Lösungsanteile vorteilhaft ist. Anschließend wird die Lösung mit solvesso 100 auf 1 l aufgefüllt.

Die resultierende Formulierung ist eine homogene flüssigkeit, die sowohl bei 3monatiger Lagerung bei 50°C als auch bei Raumtemperatur homogen bleibt. Nach 7tägiger Lagerung bei 0°C auftretende Inhomogenitäten verschwinden nach 3stündiger Lagerung bei Raumtemperatur (Test entsprechend CIPAC MT 39.1 zur Prüfung der Kältestabilität emulgierbarer Konzentrate). Die Formulierung dispergiert in Wasser leicht zu einer homogenen Emulsion.

| | |
|---|---|
| FBO | 549,98 g |
| $B_2O_3$ | 36,8 g |

Propandiol-1,2     80,4 g
Isobutanol     155,7 g
Wettol EM1     50 g
Wettol EM2     50 g
Solvesso 100     ad 1 l

Beispiel 19:

Der Großteil des Cumols, 2-Methyl-2,4-pentandiol und $B_2O_3$ werden in einem Reaktionsgefäß unter rühren auf 50°C erhitzt und weitere 15 min. gerührt. Nach Zugabe des Cyhexatin wird die resultierende Suspension auf 80°C erhitzt und bis zu ihrer Klärung gerührt. Anschließend werden durch azeotrope Vakuumdestillation 1,43 - 1,5 Mol Wasser pro Mol Cyhexatin entfernt. Die Oberphase des Destillats (Cumol) wird wieder mit der Cyhexatinlösung vereinigt und diese nach 24stündigem Stehen bei Raumtemperatur durch Filtration von unlöslichen Bestandteilen befreit. Nach Zugabe der Emulgatoren zum Cyhexatinkonzentrat wird mit Cuol auf 1 l aufgefüllt.

Die resultierende Formulierung ist eine viskose, homogene Flüssigkeit, die sowohl bei Raumtemperatur als auch bei 7tägiger Lagerung bei 0°C homogen bleibt und in Wasser leicht zu einer homogenen Emulsion dispergiert.

Cyhexatin     554,99 g
$B_2O_3$     50,6 g
2-Methyl-2,4-pentandiol     171,7 g
Atlox 3400-B     80,0 g
Atlox 3386-B     15,0 g
TWEEN 65     5,0 g
Cumolad     ad 1 l

## Ansprüche

1. Kältestabile, in Wasser dispergierbare flüssige Konzentratformulierung einer akariziden Organozinnverbindung, dadurch gekennzeichnet, daß sie 2,5 bis 30 % Gew./Vol. mindestens einer grenzflächenaktiven Substanz, Borsäure oder deren Anhydride, mindestens einen gesättigten oder ungesättigten geradkettigen oder verzweigten ein-, zwei-oder dreiwertigen Alkohol, gegebenenfalls substituiert durch eine oder mehrere Halogen-, Nitro-, Alkoxy-, Alkoxyalkoxy-, Alkoxycarbonyl-, Alkylcarbonyl-, Alkylcarbonyloxy-oder Arylgruppen, gegebenenfalls ein Lacton und gegebenenfalls ein organisches nicht-alkoholisches Lösungmittel, und darin gelöst 15 bis 70 % Gew./Vol., vorzugsweise 15 - 60 % Gew./Vol., Tricyclohexylzinn-oder Trineophyllzinnoxid oder -hydroxid enthält.

2. Konzentratfomulierung nach Anspruch 1, dadurch gekennzeichnet, daß die Molverhältnisse des entsprechenden Organozinnhydroxids zur Borsäure oder dem Borsäureäquivalent des Anhydrids und zum Hydroxyläquivalent des (der) enthaltenen Alkohols (Alkohole) 1 : (0,5 bis 2) : (1 bis 5), vorzugsweise 1 : 1 : 2 bis 3, insbesondere 1 : 1 : 3 betragen.

3. Konzentratformulierung nach Anspruch 1, dadurch gekennzeichnet, daß sie kein nicht-alkoholisches organisches Lösungsmittel enthält, und die Menge an Emulgator über 10 % Gew./Vol. beträgt.

4. Konzentratformulierung nach einem der vorstehenden Ansprüche, dadurch gekennzeichnet, daß die Organozinnverbindung Cyhexatin oder Fenbutatinoxid ist.

5. Konzentratformulierung nach einem der vorstehenden Ansprüche, dadurch gekennzeichnet, daß der oder jeder gegebenenfalls substituierte Alkohol bis zu 18 Kohlenstoffatome enthält.

6. Konzentratformulierung nach Anspruch 5, dadurch gekennzeichnet, daß der gegebenenfalls substituierte Alkohol ein primärer Alkanol, ein primärer Alkoxyalkanol, ein Alkoxyalkoxyalkanol mit insgesamt 1 bis 6 Kohlenstoffatomen oder Propandiol-1,2, Propandiol-1,3 oder Hexylenglykol ist.

7. Verfahren zur Herstellung eines Konzentrates nach einem der vorstehenden Ansprüche, umfassend die Bildung einer Lösung einer Organozinnverbindung durch Mischen von 15 bis 70 % Gew./Vol. des Trineophyllzinn-oder Tricyclohexylzinnoxids oder -hydroxids, 2,5 bis 30 % Gew./Vol. mindestens eines Emulgators, Borsäure oder deren Anhydride und mindestens eines gesättigten oder ungesättigten ein-, zwei-oder dreiwertigen, gegebenenfalls durch eine oder mehrere Halogen-, Nitro-, Alkoxy-, Alkoxyalkoxy-, Alkoxycarbonyl-, Alkylcarbonyl-, Alkylcarbonyloxy-oder Arylgruppen substituierten Alkohols, wobei die Molverhältnisse des entsprechenden Organozinnhydroxids zur Borsäure oder zum Borsäureäquivalent des Anhydrids und zum Hydroxyläquivalent des (der) enthaltenden Alkohols (Alkohole) 1: (0,5 bis 2) : (1 bis 5) betragen, und gegebenenfalls eines nicht-alkoholischen organischen Lösungmittels oder Lösungsmittelgemisches bei Temperaturen von 20 bis 80 °C, vorzugsweise von 50 bis 80 °C zur Beschleunigung der Lösungsbildung, und gegebenenfalls eine teilweise oder vollständige Trocknung dieses Konzentrates.

8. Verfahren zur Herstellung einer wässrigen Dispersion einer Organozinnverbindung, welches ein Dispergieren eines Konzentrates gemäß einem der Ansprüche 1 bis 6 in Wasser umfaßt.

9. Verfahren zur Bekämpfung von Schädlingen an einem Ort, welches ein Aufbringen einer wässrigen Dispersion eines Konzentrates gemäß Anspruch 8 auf den Ort umfaßt.

14

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 153 582 (CHEMIE LINZ)<br>* Ansprüche 1,3,10; Seite 14, Beispiel 54 *<br>--- | 1-9 | A 01 N 55/04<br>A 01 N 25/04<br>A 01 N 25/02 |
| A,D | EP-A-0 057 035 (SHELL)<br>* Ansprüche *<br>--- | 1-9 | |
| A | CH-A- 427 404 (MONSANTO)<br>* Seite 1, Zeilen 1-32; Seite 2, Zeilen 14-21,36-44 *<br>--- | 1-9 | |
| A | EP-A-0 084 457 (DOW)<br>* Ansprüche *<br>----- | 1-9 | |

RECHERCHIERTE
SACHGEBIETE (Int. Cl.4)

A 01 N

Der vorliegende Recherchenbericht wurde für alle Patentansprüche erstellt

| Recherchenort | Abschlußdatum der Recherche | Prüfer |
|---|---|---|
| DEN HAAG | 08-06-1988 | DECORTE D. |

EPO FORM 1503 03.82 (P0403)